# FASCICULE DE BREVET EUROPEEN

(11) **EP 1 428 464 B1**
(45) Date de publication et mention de la délivrance du brevet: **10.08.2005**
(21) Numéro de dépôt: 03356195.2
(22) Date de dépôt: 09.12.2003
(51) Int. Cl.: A47J 37/12

(54) **Friteuse éléctrique avec un boitier exterieur**
Elektrisches Fritiergerät mit einem äusseren Gehäuse
Electric deep fat fryer with outer housing

(30) Priorité: 13.12.2002 FR 0215832
(43) Date de publication de la demande: 16.06.2004
(73) Titulaire: SEB SA, 69130 Ecully (FR)
(72) Inventeur: Federico, Dominique, 21800 Chevigny Saint Sauveur (FR)
(74) Mandataire: Kiehl, Hubert

(56) Documents cités:
- WO-A-96/04832
- GB-A- 1 021 223

## Description

La présente invention concerne le domaine technique des friteuses électriques. La présente invention concerne plus particulièrement les friteuses électriques comportant une cuve montée dans un boîtier extérieur.

Dans les appareils du type précité, le boîtier comporte généralement un socle assemblé avec une paroi latérale annulaire. Une façade peut être rapportée contre la paroi latérale pour loger des organes de commande et/ou de contrôle de l'appareil. En complément ou en alternative, des organes de commande et/ou de contrôle peuvent être logés dans le socle.

Pour limiter les risques de brûlure lors d'un contact avec les parois du boîtier lors de la cuisson, il a été proposé de réaliser la paroi latérale annulaire en matière plastique.

Le document EP 0 295 159 propose une friteuse électrique dans laquelle la cuve repose sur une bague réalisée dans une matière résistant aux températures élevées du bord de la cuve. La bague est montée sur une jupe réalisée dans une matière plastique ne résistant pas en continu à la température du bord supérieur de la cuve. Un socle ferme la partie inférieure de la jupe.

Le document WO 96/04832 propose une friteuse électrique comportant une cuve amovible montée dans un boîtier. Le boîtier comporte une bague montée sur une jupe réalisée dans une matière plastique ne résistant pas en continu à la température du bord supérieur de la cuve, un socle fermant la partie inférieure de la jupe. La cuve est agencée dans une contre-cuve fixée à la bague.

L'un ou l'autre de ces appareils présentent une paroi latérale dont l'échauffement reste limité lors de la cuisson. Toutefois la construction de ces appareils nécessite de nombreuses manipulations lors de l'assemblage, voire lors de la maintenance.

L'objet de la présente invention est de simplifier les opérations d'assemblage et/ou de maintenance d'une friteuse électrique.

Un objet complémentaire de la présente invention est de proposer une friteuse électrique comprenant une paroi latérale présentant un échauffement limité lors de la cuisson.

L'objet de la présente invention est atteint avec une friteuse électrique comportant un boîtier présentant une enveloppe extérieure comprenant une bague montée sur une paroi latérale annulaire, la bague présentant une paroi supérieure entourant une ouverture supérieure dans laquelle est disposée une cuve prévue pour contenir un bain de friture, la cuve étant associée à des moyens de chauffe, caractérisée en ce que la bague présente une paroi latérale extérieure formant une partie de l'enveloppe extérieure, au moins un organe de commande et/ou de contrôle étant monté dans la paroi latérale extérieure.

En d'autres termes, la paroi latérale extérieure de la bague permet de ménager dans le boîtier un espace dans lequel sont logés au moins partiellement des éléments mécaniques ou électriques de commande ou de contrôle, tels que notamment un mécanisme d'ouverture du couvercle, et/ou un interrupteur, et/ou un minuteur, ou et/ou une régulation électronique. Ces éléments peuvent être montés directement ou indirectement sur la bague. Des ouvertures ménagées dans la paroi latérale extérieure de la bague permettent d'accéder aux organes de commande et/ou de contrôle, tels que notamment un bouton de déverrouillage du couvercle, et/ou un bouton de commande d'un interrupteur, d'un minuteur ou d'un dispositif de réglage d'une température de consigne, et/ou un afficheur. La bague n'est pas nécessairement réalisée en une seule pièce, mais peut aussi être obtenue à partir de plusieurs pièces assemblées. Des organes de préhension peuvent au moins partiellement être issus de la paroi latérale extérieure de la bague. La bague peut également supporter un domino pour les connexions électriques de l'appareil, des moyens d'articulation d'un couvercle, et/ou servir de guidage ou de logement pour le monte et baisse du panier de cuisson. La réalisation de la bague est rendue un peu plus complexe, mais elle permet de simplifier la réalisation du reste du boîtier de l'appareil. En effet le reste du boîtier peut être déchargé de la plupart des éléments techniques autres que ceux nécessaires à la structure du boîtier. Il n'est pas nécessaire de prévoir une façade montée sur une paroi latérale du boîtier pour loger des organes de commande et/ou de contrôle. Si nécessaire, un perçage peut être prévu dans la paroi latérale annulaire pour la commande du réglage de la température de consigne d'un thermostat bimétallique. Par contre la commande de la température d'une régulation électronique peut être agencée dans la paroi latérale extérieure de la bague.

Selon une forme de réalisation avantageuse, la bague est réalisée dans une matière plastique résistant aux températures élevées atteintes par le bord supérieur de la cuve lors de la friture. La cuve peut ainsi être en contact direct avec la bague. En alternative, des moyens de support résistant aux températures élevées atteintes par le bord supérieur de la cuve lors de la friture peuvent être intercalés entre la cuve et la bague.

Selon une forme de réalisation avantageuse, la paroi latérale extérieure de la bague est annulaire. Cette disposition contribue à renforcer la rigidité de la bague qui forme ainsi une demi-coque retournée percée d'une ouverture prévue pour le passage de la cuve.

Avantageusement la paroi latérale annulaire est réalisée en matière plastique. La paroi latérale annulaire peut être obtenue par moulage. Le report des organes de commande et/ou de contrôle sur la bague facilite la réalisation de la paroi latérale annulaire.

Selon une forme de réalisation avantageuse, la cuve est montée amovible dans une contre-cuve montée dans le boîtier sous l'ouverture supérieure. La contre-cuve enveloppe la cuve au moins partiellement sur toutes ses faces. La contre-cuve peut être réalisée en une seule pièce, par exemple par emboutissage d'une tôle métallique, ou en plusieurs pièces. Un thermostat ou un capteur de température appartenant aux moyens de régulation et/ou des moyens de protection thermique tels qu'un fusible thermique peuvent notamment être montés sur les parois de la contre-cuve. En d'autres termes, la contre-cuve permet de supporter le thermostat et/ou le capteur et/ou le fusible thermique. Selon une forme de réalisation, l'élément chauffant peut être monté à l'intérieur de la contre-cuve. Un réflecteur peut notamment être interposé entre l'élément chauffant et l'une au moins des parois de la contre-cuve. Selon une autre forme de réalisation, l'élément chauffant peut être solidaire de la cuve, un connecteur électrique étant alors monté dans la contre-cuve. La paroi latérale annulaire devient alors une simple paroi de structure de l'enveloppe du boîtier.

Avantageusement alors, la contre-cuve est fixée à la bague autour de l'ouverture supérieure. Cette disposition simplifie notablement la construction du boîtier.

En alternative, la cuve peut être montée fixe dans le boîtier. Les moyens de protection thermique, formés par exemple par un fusible thermique, ainsi que le thermostat ou le capteur de température appartenant aux moyens de régulation peuvent alors être montés sur la face extérieure de la cuve. La paroi latérale annulaire reste également une simple paroi de structure de l'enveloppe du boîtier.

Avantageusement, la paroi latérale annulaire est reliée à un fond. La partie inférieure du boîtier constitue ainsi un socle formant une demi-coque. L'enveloppe extérieure du boîtier ne comporte que deux pièces de structure principales, la bague et le socle, ce qui permet de simplifier les opérations d'assemblage de l'appareil.

Avantageusement encore, la hauteur de la paroi latérale annulaire est supérieure à la hauteur de la paroi latérale extérieure. Cette disposition permet notamment de faciliter l'accès aux parties techniques de l'appareil montées sur la bague. De plus, cette disposition contribue à réduire le coût de la bague, du fait de la réduction du volume de matière nécessaire.

Avantageusement encore les moyens de chauffe sont prévus pour le chauffage de la cuve. En d'autres termes, les moyens de chauffe sont solidaires de la cuve, ou sont montés dans le boîtier de manière à chauffer l'extérieur de la cuve. En alternative, les moyens de chauffe peuvent être disposés dans le bain de cuisson contenu par la cuve.

Avantageusement encore le boîtier comporte des organes de préhension issus au moins partiellement de la bague, ce qui permet d'éviter de rapporter des pièces supplémentaires sur le boîtier.

Avantageusement alors les organes de préhension sont issus de la moitié supérieure du boîtier, ce qui procure une meilleure stabilité lors du déplacement de l'appareil.

Avantageusement alors les organes de préhension sont creux. Cette disposition permet une meilleure isolation thermique. De préférence, l'espace ménagé entre la face inférieure et la face supérieure des organes de préhension communique avec l'espace intérieur délimité par les parois latérales du boîtier.

Selon une disposition avantageuse la face inférieure et la face supérieure des organes de préhension sont assemblées au moyen de vis. Toutefois l'assemblage de la paroi latérale annulaire et de la paroi latérale extérieure ne s'effectue pas nécessairement au niveau des organes de préhension.

Avantageusement alors pour un meilleur aspect et un nettoyage plus aisé la face inférieure desdits organes de préhension comporte au moins un perçage apte à recevoir une vis venant en prise dans un logement de la face supérieure.

Avantageusement encore pour une meilleure préhension, une cavité est ménagée sous chacune des faces inférieures des organes de préhension.

Selon une autre disposition avantageuse la paroi latérale annulaire comporte au moins un montant assemblé par vis avec un montant issu de la paroi latérale extérieure. Les montants peuvent être intérieurs ou extérieurs. Les montants peuvent être agencés à l'intérieur ou à l'extérieur du boîtier. Les montants peuvent notamment appartenir à une conformation prévue pour l'enroulement du cordon électrique de l'appareil.

L'invention sera mieux comprise à l'étude d'un exemple de réalisation et de ses variantes, pris à titre nullement limitatif, illustré dans les figures annexées, dans lesquelles :
- la figure 1 est une vue de face d'un exemple de réalisation d'une friteuse selon l'invention,
- la figure 2 est une vue de dessous de la partie supérieure du boîtier de la friteuse montrée à la figure 1,
- la figure 3 est une vue de côté en coupe de la friteuse montrée à la figure 1,
- la figure 4 est une vue de dessous en éclaté de la friteuse montrée aux figures 1 et 3.

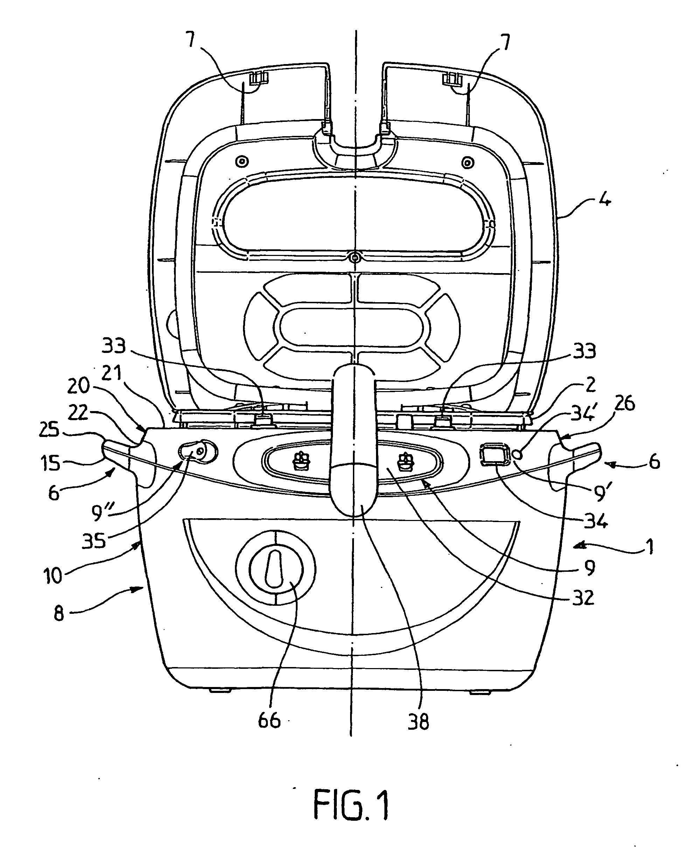

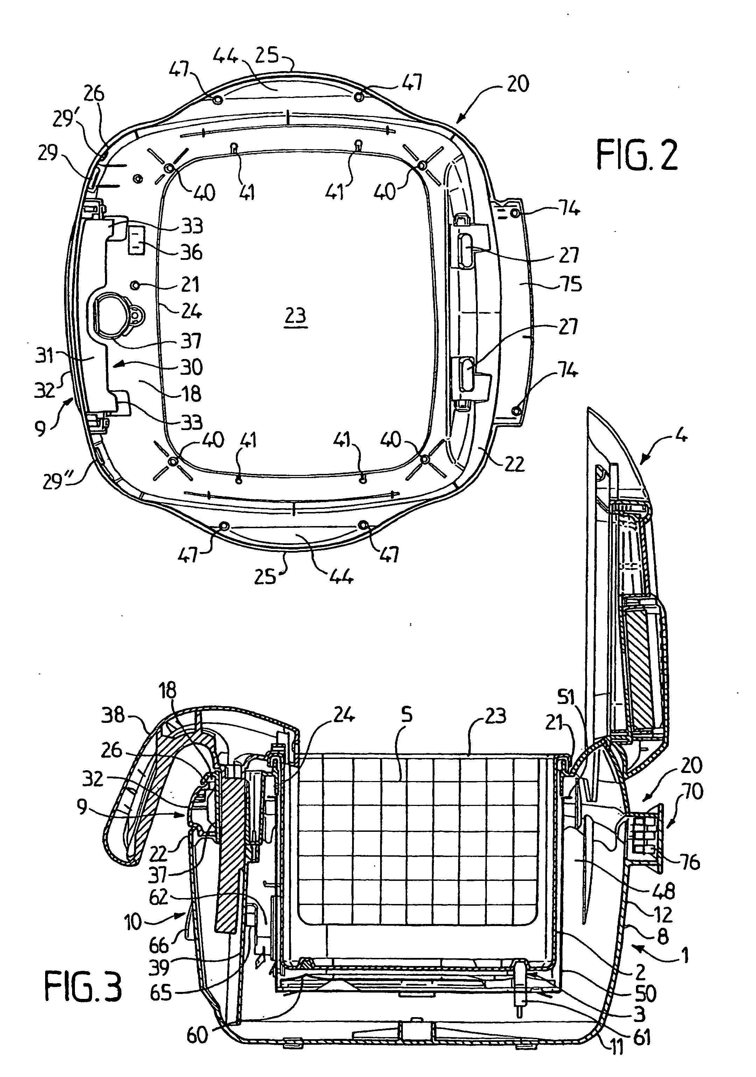

L'exemple de réalisation montré aux figures 1 à 4 se rapporte à une friteuse comportant une cuve 2 montée amovible dans un boîtier 1. Des moyens de chauffe électriques 3 sont prévus dans le boîtier 1 pour chauffer la cuve 2. Le boîtier 1 est fermé par un couvercle 4. La cuve 2 peut recevoir un panier 5 destiné à contenir les aliments à frire.

Le boîtier 1 comporte une enveloppe extérieure 8 présentant une partie inférieure 10 et une partie supérieure 20. Le boîtier 1 comporte deux organes de préhension 6 disposés de manière diamétralement opposée. Les organes de préhension 6 sont proéminents par rapport à l'enveloppe extérieure 8. Chaque organe de préhension 6 comporte une face inférieure 15 issue de la partie inférieure 10 du boîtier 1 et une face supérieure 25 issue de la partie supérieure 20 du boîtier 1.

La partie supérieure 20 du boîtier 1 forme une bague 26 réalisée en matière plastique résistant aux températures élevées atteintes par le bord supérieur de la cuve lors de la friture, telle que par exemple le PBTP. La bague 26 présente une paroi supérieure 21 percée d'une ouverture supérieure 23. La bague 26 présente une paroi latérale extérieure 22 disposée sous la paroi supérieure 21. La paroi latérale extérieure 22 forme une partie de l'enveloppe extérieure 8 du boîtier 1. La paroi latérale extérieure 22 est annulaire. Une paroi annulaire intérieure 24 issue de la face inférieure de la paroi supérieure 21 entoure l'ouverture 23. La paroi latérale extérieure 22 est galbée et est incurvée vers l'intérieur en direction de la paroi supérieure 21. L'épaisseur de la paroi latérale extérieure 22 est inférieure à la hauteur de la paroi latérale extérieure 22.

La bague 26 forme une demi-coque retournée percée de l'ouverture supérieure 23. La bague 26 constitue une partie de l'enveloppe extérieure 8 du boîtier 1.

La bague 26 comporte des moyens d'articulation 27 du couvercle 4. Les moyens d'articulation 27 sont ménagés essentiellement sur la paroi supérieure 21. Le couvercle 4 ferme la paroi supérieure 21.

La paroi latérale extérieure 22 de la bague 26 ménage dans le boîtier 1 un espace interne 18 dans lequel sont logés au moins partiellement des éléments mécaniques ou électriques de commande ou de contrôle de l'appareil.

Un premier organe de commande et/ou de contrôle 9 de l'appareil comprend un bouton de déverrouillage 32 appartenant à un dispositif de verrouillage et de déverrouillage 30 du couvercle 4. Le dispositif de verrouillage et de déverrouillage 30 est monté dans la bague 26 en dessous de la paroi supérieure 21. Le bouton de déverrouillage 32 est formé par une face externe d'une pièce 31 montée mobile en rotation par rapport à la bague 26. Le bouton de déverrouillage 32 est monté dans une ouverture de la face avant de la paroi latérale 22. Des crochets 33 issus de la pièce 31, mieux visibles sur la figure 1, traversent la paroi supérieure 21 et sont susceptibles de venir en prise avec des ergots 7 issus de la face inférieure du couvercle 4.

Un deuxième organe de commande et/ou de contrôle 9' de l'appareil comprend un afficheur 34 et un bouton de réglage 34' appartenant à un minuteur monté dans la bague 26. L'afficheur 34 et le bouton de réglage sont montés dans la paroi latérale 22. L'afficheur 34 est visible par une fenêtre 29 ménagée en face avant de la paroi latérale 22. Le bouton de réglage 34' est monté dans une ouverture 29' de la face avant de la paroi latérale 22.

Un troisième organe de commande et/ou de contrôle 9" de l'appareil comprend un bouton de commande 35 appartenant à un interrupteur marche/arrêt monté dans la bague 26. Le bouton de commande 35 est monté dans une ouverture 29" ménagée en face avant de la paroi latérale 22.

Un autre interrupteur 36 est monté dans la bague 26 sous la face supérieure 21. L'interrupteur 36 présente un bouton de commande susceptible d'être actionné par la cuve 2 mise en place dans le boîtier 1. L'interrupteur 36 permet de détecter la présence de la cuve 2.

Une contre-cuve 50 est montée sous la bague 26. A cet effet la bague 26 présente des logements 40 prévus pour recevoir des vis traversant le bord supérieur 51 de la contre-cuve 50. La bague 26 comporte également des tiges 41 venant s'insérer dans des orifices 52 ménagés sur le bord supérieur 51. La paroi annulaire intérieure 24 de la bague 26 et la contre-cuve 50 forment une paroi interne du boîtier 1.

Un réflecteur 60 est disposé sur le fond de la contre-cuve 50. Un élément chauffant blindé 61 est agencé au dessus du réflecteur 60. La cuve amovible 2 repose sur l'élément chauffant 61. Un thermostat 62 et un fusible thermique 63 sont montés flottants sur la paroi latérale de la contre-cuve 60.

La bague 26 comporte un logement de guidage 37 pour une poignée 38 du panier de cuisson 5. Le logement 37 est issu de la paroi supérieure 21. Un cache 39 est fixé sous la paroi supérieure 21. Le cache 39 prolonge le logement 37. Le cache 39 est interposé entre le boîtier 1 et la contre-cuve 50.

La partie inférieure 10 du boîtier 1 comporte un fond 11 raccordé à une paroi latérale annulaire 12 ménageant une ouverture supérieure prévue pour loger la contre-cuve 50. La paroi latérale 12 présente un perçage 64 prévu pour le passage d'une tige de commande 65 du thermostat 62. Un bouton 66 de réglage de la température de consigne peut être monté sur la tige 65. La partie inférieure 10 est par exemple réalisée en polypropylène. La partie inférieure 10 forme un socle et constitue une partie de l'enveloppe extérieure 8 du boîtier 1.

La hauteur de la paroi latérale annulaire 12 est supérieure à la hauteur de la paroi latérale extérieure 22. Ainsi les organes de préhension 6 appartenant à la paroi latérale annulaire 12 et à la paroi latérale extérieure 22 sont issus de la moitié supérieure du boîtier 1.

Les organes de préhension 6 sont creux. Un espace 44 est ménagé entre la face inférieure 15 et la face supérieure 25 de chaque organe de préhension 6. Les espaces 44 communiquent avec un espace périphérique intérieur 48 entourant la partie médiane et la partie inférieure de la contre-cuve 50 dans laquelle est placée la cuve 2. Chaque face inférieure 15 comporte deux perçages 17 prévus chacun pour recevoir une vis de fixation (non montrée aux figures) venant en prise dans un logement 47 de la face supérieure 25 correspondante. Une cavité 46 est ménagée sous chacune des faces inférieures 15 pour une meilleure préhension.

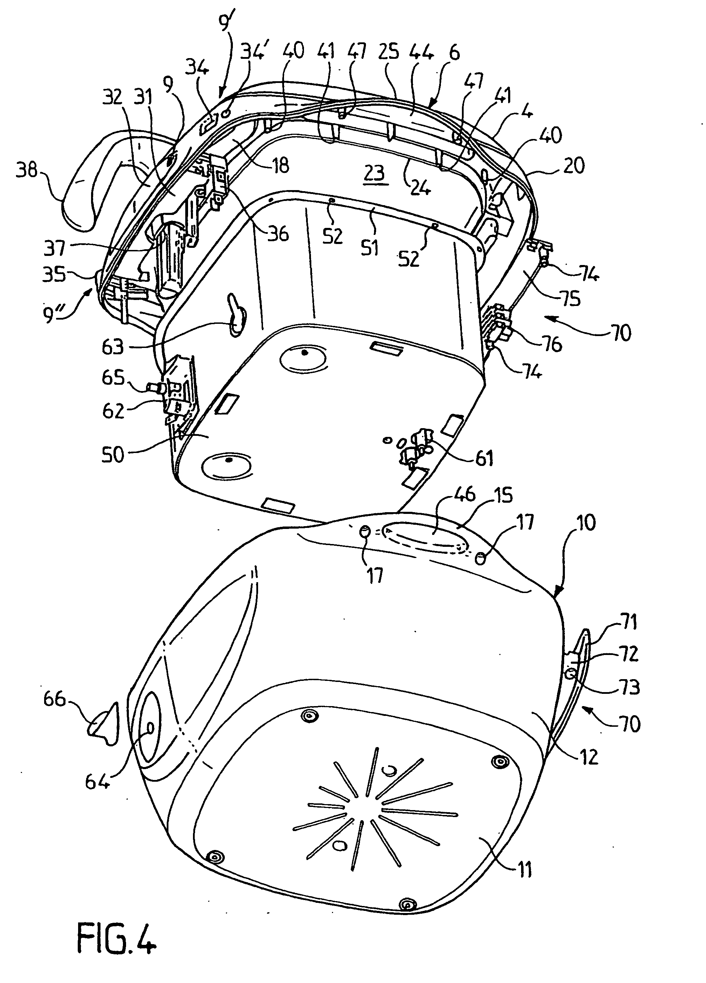

Le boîtier 1 comporte sur sa face arrière une conformation 70, prévue pour l'enroulement du cordon électrique de l'appareil. Tel que montré à la figure 4, la conformation 70 présente une paroi 71 reliée par un montant 72 à la paroi latérale annulaire 12. Le montant 72 comporte deux perçages 73 prévus chacun pour recevoir une vis de fixation venant en prise dans un logement 74 ménagé dans un montant 75 issu de la bague 26. Un domino électrique 76 est fixé au montant 75.

La paroi latérale extérieure 22 de la bague 26 est agencée à distance de la cuve 2 prévue pour contenir un bain de friture, et forme une partie de la paroi extérieure du boîtier 1. Du fait que la contre-cuve 50 est interposée entre le boîtier 1 et la cuve 2, la partie inférieure 10 du boîtier 1 entoure à distance la partie inférieure de la cuve 2 ainsi que la partie médiane de la cuve 2 formée par les parois latérales de la cuve 2 à l'exception de la partie supérieure.

La construction obtenue est ainsi particulièrement économique. Ces dispositions permettent de faciliter l'assemblage de l'appareil. Les éléments techniques du boîtier 1 sont concentrés sur la bague 26. La partie inférieure 10 forme une simple demi-coque pouvant être obtenue par moulage. Le démontage de la partie inférieure 10 permet un accès aisé aux éléments techniques, notamment du fait de la faible hauteur de la bague 26.

A titre de variante, les organes de préhension 6 pourraient être issus de la bague 26, ou au contraire, de la paroi annulaire 12.

A titre de variante, les organes de préhension 6 ne sont pas nécessairement proéminents par rapport au boîtier 1.

A titre de variante, les moyens de chauffe 3 associés à la cuve 2 ne sont pas nécessairement en contact avec la cuve 2. Les moyens de chauffe 3 peuvent notamment être montés à distance de la cuve, par exemple au-dessus du fond de la contre-cuve ou dans le fond de la contre-cuve 50. La contre-cuve 50 n'est pas nécessairement réalisée en une seule pièce. Les moyens de chauffe 3 prévus pour chauffer la cuve 2 ne sont pas nécessairement montés sur la contre-cuve 50, mais peuvent notamment être solidaires de la cuve 2, par exemple en étant rapportés sous le fond d'une cuve emboutie ou en étant intégrés dans le fond d'une cuve moulée. Les moyens de chauffe sont alors disposés sous la paroi supérieure du fond de la cuve. En alternative, les moyens de chauffe peuvent être prévus pour le chauffage du bain de cuisson contenu dans la cuve. Les moyens de chauffe sont alors issus d'un boîtier de commande et plongent dans la cuve. Au moins une partie des organes de commande et/ou de contrôle de l'appareil peut alors être agencée dans ce boîtier de commande, notamment les organes appartenant aux moyens de régulation et/ou à l'interrupteur. Toutefois d'autres organes de commande et/ou de contrôle de l'appareil, appartenant notamment au dispositif de déverrouillage du couvercle ou au minuteur, peuvent être montés dans la paroi latérale extérieure.

A titre de variante, le thermostat 62 à température de consigne réglable peut être remplacé par un thermostat à température de consigne fixe ou par un capteur associé à une régulation électronique. La régulation électronique peut alors être logée dans la bague 26.

A titre de variante, la paroi latérale externe 22 n'est pas nécessairement annulaire. Par exemple la bague 26 peut comporter une paroi latérale externe seulement sur la face avant du boîtier.

A titre de variante, le fond 11 n'est pas nécessairement issu de la même pièce que la paroi latérale annulaire 12.

A titre de variante complémentaire, la cuve 2 peut être montée fixe dans le boîtier 1. Le thermostat 62 et le fusible thermique 63 peuvent alors être montés sur une paroi extérieure de la cuve. La contre-cuve 50 n'est plus nécessaire. La cuve ne repose pas nécessairement sur la bague 26. Cette disposition permet également d'utiliser un boîtier comportant une partie inférieure dont la réalisation est simplifiée.

La présente invention n'est nullement limitée à l'exemple de réalisation décrit et à ses variantes, mais englobe de nombreuses modifications dans le cadre des revendications.

## Revendications

1. Friteuse électrique comportant un boîtier (1) présentant une enveloppe extérieure (8) comprenant une bague (26) montée sur une paroi latérale annulaire (12), la bague (26) présentant une paroi supérieure (21) entourant une ouverture supérieure (23) dans laquelle est disposée une cuve (2) prévue pour contenir un bain de friture, la cuve (2) étant associée à des moyens de chauffe (3), **caractérisée en ce que** la bague (26) présente une paroi latérale extérieure (22) formant une partie de l'enveloppe extérieure (8), au moins un organe de commande et/ou de contrôle (9, 9', 9") étant monté dans la paroi latérale extérieure (22).

2. Friteuse selon la revendication 1, **caractérisée en ce que** la bague (26) est réalisée dans une matière plastique résistant aux températures élevées atteintes par le bord supérieur de la cuve (2) lors de la friture.

3. Friteuse selon l'une des revendications 1 ou 2, **caractérisée en ce que** la paroi latérale extérieure (22) est annulaire.

4. Friteuse selon l'une des revendications 1 à 3, **caractérisée en ce que** la paroi latérale annulaire (12) est réalisée en matière plastique.

5. Friteuse selon l'une des revendications 1 à 4, **caractérisée en ce que** la cuve (2) est montée amovible dans une contre-cuve (50) montée sous l'ouverture supérieure (23).

6. Friteuse selon la revendication 5, **caractérisée en ce que** la contre-cuve (50) est fixée à la bague (26) autour de l'ouverture supérieure (23).

7. Friteuse selon l'une des revendications 1 à 6, **caractérisée en ce que** la paroi latérale annulaire (12) est reliée à un fond (11).

8. Friteuse selon l'une des revendications 1 à 7, **caractérisée en ce que** la hauteur de la paroi latérale annulaire (12) est supérieure à la hauteur de la paroi latérale extérieure (22).

9. Friteuse selon l'une des revendications 1 à 8, **caractérisée en ce que** les moyens de chauffe (3) sont prévus pour le chauffage de la cuve (2).

10. Friteuse selon l'une des revendications 1 à 9, **caractérisée en ce que** le boîtier (1) comporte des organes de préhension (6) issus au moins partiellement de la bague (26).

11. Friteuse selon la revendication 10, **caractérisée en ce que** les organes de préhension (6) sont issus de la moitié supérieure du boîtier (1).

12. Friteuse selon l'une des revendications 10 ou 11, **caractérisée en ce que** les organes de préhension (6) sont creux.

13. Friteuse selon l'une des revendications 10 à 12, **caractérisée en ce que** la face inférieure (15) et la face supérieure (25) des organes de préhension (6) sont assemblées au moyen de vis.

14. Friteuse selon la revendication 13, **caractérisée en ce que** la face inférieure (15) desdits organes de préhension (6) comporte au moins un perçage (17) apte à recevoir une vis venant en prise dans un logement (47) de la face supérieure (25).

15. Friteuse selon l'une des revendications 10 à 14, **caractérisée en ce qu'**une cavité (46) est ménagée sous chacune des faces inférieures (15) des organes de préhension (6).

16. Friteuse selon l'une des revendications 1 à 15, **caractérisée en ce que** la paroi latérale annulaire (12) comporte au moins un montant (72) assemblé par vis avec un montant (75) issu de la paroi latérale extérieure (22).

## Patentansprüche

1. Elektrische Friteuse mit einem Gehäuse (1), das einen Außenmantel (8) mit einem auf einer ringförmigen Seitenwand (12) angebrachten Ring (26) umfasst, wobei der Ring (26) eine Oberseite (21) aufweist, die eine obere Öffnung (23) umgibt, in welcher eine Wanne (2) angebracht ist, die dafür vorgesehen ist, ein Fritierbad zu enthalten, wobei die Wanne (2) Heizmitteln (3) zugeordnet ist, **dadurch gekennzeichnet, dass** der Ring (26) eine äußere Seitenwand (22) aufweist, die einen Teil des Außenmantels (8) bildet, wobei mindestens ein Steuer- und/oder Kontrollglied (9, 9', 9") in der äußeren Seitenwand (22) angebracht ist.

2. Friteuse nach Anspruch 1, **dadurch gekennzeichnet, dass** der Ring (26) aus einem Kunststoff hergestellt ist, der gegenüber den hohen Temperaturen beständig ist, die der obere Rand der Wanne (2) beim Fritieren erreicht.

3. Friteuse nach einem der Ansprüche 1 oder 2, **dadurch gekennzeichnet, dass** die äußere Seitenwand (22) ringförmig ist.

4. Friteuse nach einem der Ansprüche 1 bis 3, **dadurch gekennzeichnet, dass** die ringförmige Seitenwand (12) aus Kunststoff besteht.

5. Friteuse nach einem der Ansprüche 1 bis 4, **dadurch gekennzeichnet, dass** die Wanne (2) abnehmbar in einer Gegenwanne (50) angebracht ist, welche am oberen Rand (23) angebracht ist.

6. Friteuse nach Anspruch 5, **dadurch gekennzeichnet, dass** die Gegenwanne (50) am Ring (26) um die obere Öffnung (23) befestigt ist.

7. Friteuse nach einem der Ansprüche 1 bis 6, **dadurch gekennzeichnet, dass** die ringförmige Seitenwand (12) mit einem Boden (11) verbunden ist.

8. Friteuse nach einem der Ansprüche 1 bis 7, **dadurch gekennzeichnet, dass** die Höhe der ringförmigen Seitenwand (12) höher als die Höhe der äußeren Seitenwand (22) ist.

9. Friteuse nach einem der Ansprüche 1 bis 8, **dadurch gekennzeichnet, dass** die Heizmittel (3) zum Heizen der Wanne (2) vorgesehen sind.

10. Friteuse nach einem der Ansprüche 1 bis 9, **dadurch gekennzeichnet, dass** das Gehäuse (1) Griffmittel (6) umfasst, die zum Teil aus dem Ring (26) ausgehen.

11. Friteuse nach Anspruch 10, **dadurch gekennzeichnet, dass** die Greifmittel (6) aus der oberen Hälfte des Gehäuses (1) ausgehen.

12. Friteuse nach einem der Ansprüche 10 oder 11, **dadurch gekennzeichnet, dass** die Greifmittel (6) hohl sind.

13. Friteuse nach einem der Ansprüche 10 bis 12, **dadurch gekennzeichnet, dass** die Unterseite (15) und die Oberseite (25) der Greifmittel (6) mit Schrauben zusammengefügt sind.

14. Friteuse nach Anspruch 13, **dadurch gekennzeichnet, dass** die Unterseite (15) der Greifmittel (6) mindestens eine Bohrung (17) aufweist, die eine Schraube aufnehmen kann, welche in einer Aufnahme (47) der Oberseite (25) eingreift.

15. Friteuse nach einem der Ansprüche 10 bis 14, **dadurch gekennzeichnet, dass** unter jeder der Unterseiten (15) der Greifmittel (6) eine Vertiefung ausgebildet ist.

16. Friteuse nach einem der Ansprüche 1 bis 15, **dadurch gekennzeichnet, dass** die ringförmige Seitenwand (12) mindestens eine Stütze (72) aufweist, die mit einem aus der äußeren Seitenwand (22) ausgehenden Stütze (75) verschraubt ist.

## Claims

1. An electric deep fryer comprising a housing (1) having an outer casing (8) made up of a ring (26) mounted on an annular side wall (12), the ring (26) having a top wall (21) surrounding a top opening (23) in which a bowl (2) is disposed that is designed to contain a bath of frying fat, the bowl (2) being associated with heater means (3), said electric deep fryer being **characterized in that** the ring (26) has an outside side wall (22) forming a portion of the outer casing (8), at least one control and/or monitoring member (9, 9', 9") being mounted in the outside side wall (22).

2. A deep fryer according to claim 1, **characterized in that** the ring (26) is made of a plastics material that withstands the high temperatures reached by the top edge of the bowl (2) during frying.

3. A deep fryer according to claim 1 or claim 2, **characterized in that** the outside side wall (22) is annular.

4. A deep fryer according to any one of claims 1 to 3, **characterized in that** the annular side wall (12) is made of a plastics material.

5. A deep fryer according to any one of claims 1 to 4, **characterized in that** the bowl (2) is removably mounted in a backing bowl (50) that is mounted under the top opening (23).

6. A deep fryer according to claim 5, **characterized in that** the backing bowl (50) is fastened to the ring (26) around the top opening (23).

7. A deep fryer according to any one of claims 1 to 6, **characterized in that** the annular side wall (12) is connected to a bottom (11).

8. A deep fryer according to any one of claims 1 to 7, **characterized in that** the height of the annular side wall (12) is greater than the height of the outside side wall (22).

9. A deep fryer according to any one of claims 1 to 8, **characterized in that** the heater means (3) are designed to heat the bowl (2).

10. A deep fryer according to any one of claims 1 to 9, **characterized in that** the housing (1) is provided with handle members (6) that are integral with the ring (26) at least in part.

11. A deep fryer according to claim 10, **characterized in that** the handle members (6) are integral with the top half of the housing (1).

12. A deep fryer according to claim 10 or claim 11, **characterized in that** the handle members (6) are hollow.

13. A deep fryer according to any one of claims 10 to 12, **characterized in that** the bottom face (15) and the top face (25) of each of the handle members (6) are assembled together by means of screws.

14. A deep fryer according to claim 13, **characterized in that** the bottom face (15) of each of said handle members (6) is provided with at least one hole (17) suitable for receiving a screw coming into engagement in a recess (47) in the top face (25).

15. A deep fryer according to any one of claims 10 to 14, **characterized in that** a cavity (46) is provided under the bottom face (15) of each of the handle members (6).

16. A deep fryer according to any one of claims 1 to 15, **characterized in that** the annular side wall (12) has at least one upright (72) assembled by screws to an upright (75) integral with the outside side wall (22).
